# EUROPÄISCHE PATENTSCHRIFT

(11) **EP 2 409 008 B1**
(45) Veröffentlichungstag und Bekanntmachung des Hinweises auf die Patenterteilung: **03.10.2018**
(21) Anmeldenummer: 10788249.0
(22) Anmeldetag: 29.11.2010
(51) Int. Cl.: F01P 5/12, F01P 11/02, F16D 35/02, F01P 7/16

(54) **KÜHLSYSTEM, INSBESONDERE EINES KRAFTFAHRZEUGS**
COOLING SYSTEM, IN PARTICULAR FOR A MOTOR VEHICLE
SYSTÈME DE REFROIDISSEMENT, EN PARTICULIER POUR UN VÉHICULE À MOTEUR

(30) Priorität: 27.11.2009 DE 102009055975
(43) Veröffentlichungstag der Anmeldung: 25.01.2012
(73) Patentinhaber: Voith Patent GmbH, 89522 Heidenheim (DE)
(72) Erfinder: BARTHELMÄS, Sandra, 91541 Rothenburg (DE); THÖNNIßEN, Jochen, 89233 Neu-Ulm (DE); KLEY, Markus, 73479 Ellwangen (DE); LAUKEMANN, Dieter, 74564 Crailsheim (DE)
(74) Vertreter: Dr. Weitzel & Partner
(86) Internationale Anmeldenummer: PCT/EP2010/007223
(87) Internationale Veröffentlichungsnummer: WO 2011/063982

(56) Entgegenhaltungen:
- EP-A2- 0 972 916
- DE-A1- 19 822 225
- US-A- 2 855 909
- US-A- 4 493 293
- US-A1- 2005 205 682

## Beschreibung

Die vorliegende Erfindung betrifft ein Kühlsystem, im Einzelnen gemäß den Merkmalen im Oberbegriff von Anspruch 1.
Kühlsysteme der hier vorliegenden Art werden zum Kühlen eines Antriebsmotors und/oder von anderen Aggregaten, insbesondere eines Fahrzeugantriebsstrangs, verwendet. Sie umfassen einen Kühlkreislauf, in welchem ein Kühlmedium mittels einer Kühlmediumpumpe umgewälzt wird. Das Kühlmedium ist beispielsweise Wasser oder ein Wassergemisch. Durch die Umwälzung im Kühlkreislauf wird das Kühlmedium dem zu kühlenden Aggregat, insbesondere einem Antriebsmotor, zugeführt, nimmt dort die abzuführende Wärme auf und strömt weiter zu einem in dem Kühlkreislauf vorgesehenen Wärmeüberträger, insbesondere Wasser-Luft-Wärmeüberträger, wo es die aufgenommene Wärme an die Umgebung abgibt. Prinzipiell kann die vom Kühlmedium aufgenommene Wärme auch nicht einfach an die Umgebung abgeführt werden, sondern nutzbringend im Antriebsstrang beziehungsweise im Fahrzeug eingesetzt oder als Leistung rückgewonnen werden. Die vorliegende Erfindung ist bei jedem Kühlsystem der vorgenannten Art anwendbar.

Eine Kühlmittelpumpe, die durch eine mit Kühlmedium befüllbare Kupplung angetrieben ist, ist aus US4493293 bekannt.

Während herkömmlich die Kühlmediumpumpe in einem Kraftfahrzeugkühlsystem in ständiger Triebverbindung mit dem Antriebsmotor des Fahrzeugs stand und somit in Abhängigkeit der Drehzahl des Antriebsmotors angetrieben wurde, wurden in jüngerer Zeit auch mittels eines Elektromotors angetriebene Kühlmediumpumpen vorgeschlagen, oder solche, bei denen in der Triebverbindung zwischen dem Antriebsmotor und der Kühlmediumpumpe eine schaltbare Magnetkupplung angeordnet ist. Ferner wird in der noch nicht offengelegten deutschen Patentanmeldung 10 2008 0034 973.9 vorgeschlagen, das Laufrad der Kühlmediumpumpe drehfest mit dem Sekundärrad der hydrodynamischen Kupplung zu koppeln und zugleich als Arbeitsmedium der hydrodynamischen Kupplung das Kühlmedium zu verwenden.

Obwohl die letztgenannte Ausführungsform eine Anpassung der durch die Kühlmediumpumpe aufgenommenen Leistung an die aktuell im Fahrzeug benötigte Kühlleistung ermöglicht und somit zu einer Kraftstoffersparnis führt, und ferner dadurch, dass das Arbeitsmedium der hydrodynamischen Kupplung zugleich das Kühlmedium des Kühlkreislaufes ist, und durch Vermindern der Kühlleistung der Kühlmediumpumpe bei einem Kaltstart der Antriebsmaschine die Warmlaufphase verkürzt werden kann, haben sich beim Einsatz herkömmlicher hydrodynamischer Kupplungen im Triebstrang zwischen der Antriebsmaschine und der Kühlmediumpumpe Probleme beim Entleeren des Arbeitsraumes der hydrodynamischen Kupplung, um die Kühlmediumpumpe teilweise oder vollständig abzuschalten, ergeben. So wurde das Arbeitsmedium aufgrund dessen, dass das Kühlsystem in der Regel als ein gegenüber der Umgebung abgeschlossenes System, in dem ein Überdrück entstehen kann, ausgeführt ist, nicht immer im gewünschten Ausmaß aus dem Arbeitsraum der hydrodynamischen Kupplung ausgetragen.

Der vorliegenden Erfindung liegt die Aufgabe zugrunde, ein Kühlsystem der eingangs genannten Art derart weiterzuentwickeln, dass eine Entleerung des Arbeitsraums der hydrodynamischen Kupplung jederzeit in dem gewünschten Ausmaß erfolgt.

Die erfindungsgemäße Aufgabe wird durch ein Kühlsystem mit den Merkmalen von Anspruch 1 gelöst. In den abhängigen Ansprüchen sind besonders vorteilhafte Ausgestaltungen der Erfindung angegeben.

Das erfindungsgemäße Kühlsystem, insbesondere in Form eines Kraftfahrzeugkühlsystems, weist einen Kühlkreislauf auf, in welchem ein Kühlmedium mittels einer Kühlmediumpumpe umgewälzt wird. Die Kühlmediumpumpe wird über eine hydrodynamische Kupplung mittels einer Antriebsmaschine, welche insbesondere zugleich die Antriebsmaschine zum Antreiben des Kraftfahrzeugs ist, angetrieben. Alternativ oder zusätzlich ist es erfindungsgemäß jedoch auch möglich, über eine entsprechende hydrodynamische Kupplung eine andere Arbeitsmaschine als die Kühlmediumpumpe anzutreiben und dabei durch die erfindungsgemäße Ausgestaltung, die nachfolgend noch im Detail beschrieben wird, eine zuverlässige Entleerung des Arbeitsraums der hydrodynamischen Kupplung zu erreichen, um die Drehzahl des Sekundärrades der hydrodynamischen Kupplung zu vermindern, insbesondere um das Sekundärrad der hydrodynamischen Kupplung stillzusetzen.

Erfindungsgemäß ist das Arbeitsmedium der hydrodynamischen Kupplung zugleich das Kühlmedium des Kühlkreislaufes. Ferner ist ein Ausgleichsbehälter vorgesehen, der einen mit Kühlmedium befüllten Raum und einen Luftraum oberhalb eines Kühlmediumspiegels in dem mit Kühlmedium befüllten Raum aufweist. Je nach Druckzustand im Kühlsystem beziehungsweise in Abhängigkeit der Temperatur des Kühlmediums im gesamten Kühlkreislauf wird der Kühlmediumspiegel im Ausgleichsbehälter ansteigen oder absinken und sich der Luftraum oberhalb des Kühlmediumspiegels entsprechend verringern oder vergrößern.

Erfindungsgemäß ist nun der Arbeitsraum der hydrodynamischen Kupplung über eine luftleitende Verbindung entweder stets mit dem Luftraum im Ausgleichsbehälter verbunden oder wahlweise mit dem Luftraum im Ausgleichsbehälter verbindbar. Somit es möglich, dass das "Luftpolster", das heißt Luft aus dem Luftraum des Ausgleichsbehälters, wenn gewünscht, in den Arbeitsraum der hydrodynamischen Kupplung einströmt und das aus dem Arbeitsraum der hydrodynamischen Kupplung ausströmende Arbeitsmedium ersetzt. Mit zunehmendem Ausströmen von Arbeitsmedium aus dem Arbeitsraum und damit mit Verringern des Füllungsgrades des Arbeitsraumes erhöht sich der Schlupf zwischen dem Pumpenrad und dem Turbinenrad der hydrodynamischen Kupplung und damit zwischen der Geschwindigkeit der Antriebsmaschine und der über die hydrodynamische Kupplung angetriebenen Arbeitsmaschine, insbesondere der Kühlmediumpumpe.

Insbesondere ist das Kühlsystem als gegenüber der Umgebung druckdicht abgeschlossenes System ausgeführt, in welchem permanent oder in Abhängigkeit bestimmter Randbedingungen, beispielsweise der Temperatur des Kühlmediums, ein Überdruck gegenüber der Umgebung herrscht.

In der luftleitenden Verbindung, über welche der Arbeitsraum mit dem Luftraum im Ausgleichsbehälter verbunden ist, ist gemäß einer Ausführungsform der Erfindung ein Absperrventil, insbesondere in Form eines Wegeventils, beispielsweise Wegeschiebers, vorgesehen, um diese luftleitende Verbindung wahlweise zu unterbrechen und freizugeben.

Gemäß einer vorteilhaften Ausführungsform der Erfindung ist der Arbeitsraum der hydrodynamischen Kupplung über eine weitere, arbeitsmediumleitende Verbindung mit der Saugseite der Kühlmediumpumpe stets verbunden oder wahlweise verbindbar. Wenn eine wahlweise verbindbare arbeitsmediumleitende Verbindung vorgesehen ist, kann auch in dieser ein Ventil, insbesondere Wegeventile, vorgesehen sein, um die Verbindung in einem ersten Schaltzustand freizugeben und in einem zweiten Schaltzustand zu unterbrechen.

Zusätzlich oder alternativ kann der Arbeitsraum der hydrodynamischen Kupplung über eine weitere, arbeitsmediumleitende Verbindung mit der Druckseite der Kühlmediumpumpe wahlweise verbindbar sein, wobei diese Verbindung, insbesondere wiederum mittels eines Ventils, beispielsweise Wegeventils, wahlweise unterbrechbar ist, um die hydrodynamische Kupplung auszuschalten beziehungsweise den Schlupf der hydrodynamischen Kupplung durch teilweises Entleeren des Arbeitsraums zu erhöhen.

Ferner ist alternativ oder zusätzlich der Arbeitsraum der hydrodynamischen Kupplung über eine weitere, arbeitsmediumleitende Verbindung mit dem mit Kühlmedium befüllten Raum des Ausgleichsbehälters wahlweise verbindbar, wobei dann auch diese Verbindung, insbesondere mittels eines Ventils, beispielsweise Wegeventils, wahlweise unterbrechbar ist.

Gemäß einer vorteilhaften Ausführungsform, welche eine oder mehrere der zuvor beschriebenen arbeitsmediumleitenden Verbindungen aufweisen kann, weist der Arbeitsraum der hydrodynamischen Kupplung einen Zulauf und einen Ablauf auf, wobei zumindest der Zulauf, insbesondere mittels eines Ventils, beispielsweise Wegeventils, absperrbar ist, und der Ablauf mit dem Zulauf über eine arbeitsmediumleitende Verbindung verbunden ist, sodass das über den Ablauf aus dem Arbeitsraum abgeführte Arbeitsmedium zumindest teilweise über den Zulauf dem Arbeitsraum wieder zugeführt wird, natürlich vorausgesetzt, dass der Zulauf nicht abgesperrt ist.

Das in der luftleitenden Verbindung vorgesehene Ventil und/oder das in einer der zuvor beschriebenen arbeitsmediumleitenden Verbindungen vorgesehene Ventil kann/können getaktet betätigbar sein, um den Füllungsgrad des Arbeitsraumes mit Arbeitsmedium variabel und Teilfüllungen umfassend einzustellen. Eine solche Einstellmöglichkeit bedeutet, dass der Arbeitsraum nicht nur einfach befüllt und entleert werden kann, sondern zwischen einem minimalen Füllungsgrad und einem maximalen Füllungsgrad weitere verschiedene Füllungsgrade einstellbar sind. Zusätzlich oder alternativ können Druckregelventile zum Einsatz kommen, um durch mehr oder minder starkes Androsseln des Arbeitsmediumstromes in den und/oder aus dem Arbeitsraum den Füllungsgrad zu variieren. Beispielsweise kann ein Auf-/Zu-Ventil in dem Zulauf zur hydrodynamischen Kupplung und ein Steuer- oder Regelventil im Ablauf der hydrodynamischen Kupplung angeordnet sein.

Der Ablauf der hydrodynamischen Kupplung kann mit einem solchen Abstand vom radial äußeren Umfang des Arbeitsraumes angeschlossen sein, dass stets eine Restarbeitsmediummenge im Arbeitsraum verbleibt.

Das in der luftleitenden Verbindung vorgesehene Ventil und das in wenigstens einer der zuvor beschriebenen arbeitsmediumleitenden Verbindungen vorgesehene Ventil können zu einem gemeinsamen Ventil, insbesondere Wegeventil mit einer entsprechenden Anzahl von Anschlüssen, vereint sein.

Das Turbinenrad der hydrodynamischen Kupplung kann einteilig mit dem Laufrad der Kühlmediumpumpe ausgeführt sein und/oder das Laufrad der Kühlmediumpumpe tragen.

Die Erfindung soll nachfolgend anhand von Ausführungsbeispielen exemplarisch beschrieben werden.

Es zeigen:
- Figur 1: ein erstes Ausführungsbeispiel in einer schematischen Darstellung;
- Figur 2: ein zweites Ausführungsbeispiel in einer schematischen Darstellung;
- Figur 3: ein drittes Ausführungsbeispiel in einer schematischen Darstellung;
- Figur 4: ein viertes Ausführungsbeispiel in einer schematischen Darstellung;
- Figur 5: ein fünftes Ausführungsbeispiel in einer schematischen Darstellung;
- Figur 6: ein sechstes Ausführungsbeispiel in einer schematischen Darstellung.

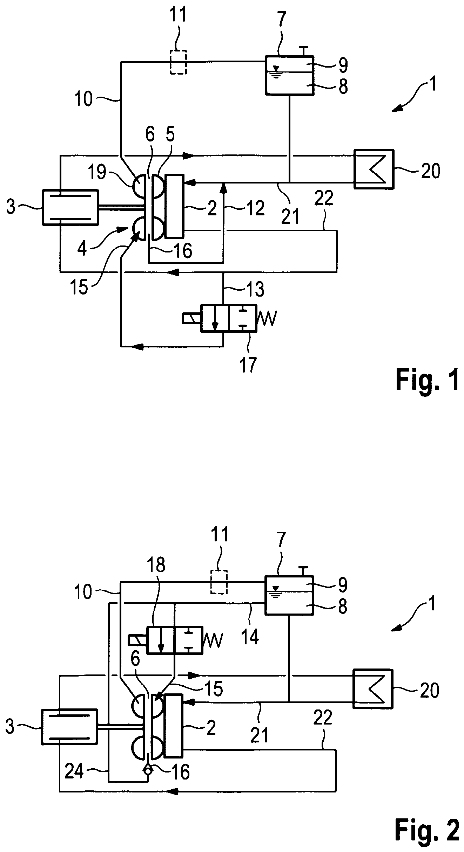

In allen Darstellungen der Figuren 1 bis 6 ist das Kühlsystem mit einem Kühlkreislauf 1 schematisch dargestellt, bei welchem die Kühlmediumpumpe 2 mittels der Antriebsmaschine 3 über eine hydrodynamische Kupplung 4 angetrieben wird, wobei das Turbinenrad 5 der hydrodynamischen Kupplung 4, das hydrodynamisch durch eine Arbeitsmediumkreislaufströmung im Arbeitsraum 6 durch das Pumpenrad 19 angetrieben wird, einteilig mit einem Laufrad der Kühlmediumpumpe 2 ausgeführt ist. Mittels des Kühlmediums wird die Antriebsmaschine 3 gekühlt, und die Wärme wird aus dem Kühlmedium mittels dem Wärmetauscher 20 an die Umgebung abgeführt. Das Kühlmedium ist zugleich das Arbeitsmedium der hydrodynamischen Kupplung 4.

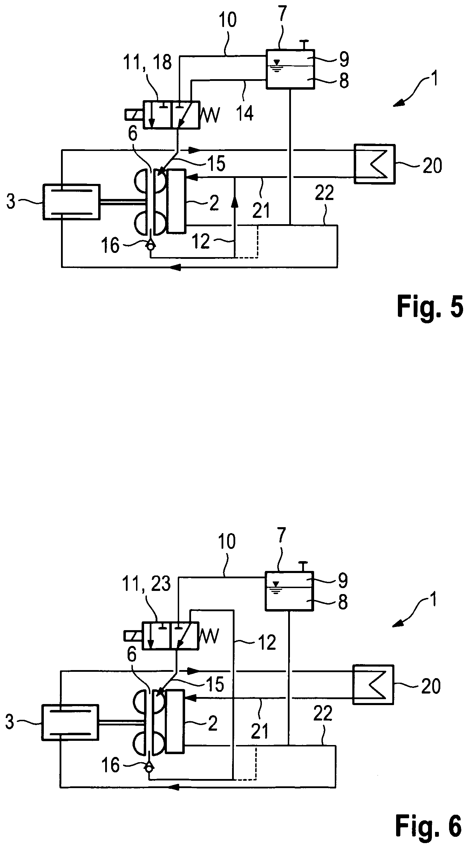

Die Kühlmediumpumpe 2 pumpt das Kühlmedium von einer Saugseite 21 zu einer Druckseite 22. Gemäß den Ausführungsformen in den Figuren 1 bis 4 ist ein Ausgleichsbehälter 7 kühlmediumleitend/arbeitsmediumleitend an der Saugseite 21 angeschlossen. Bei den Ausführungsformen in den Figuren 5 und 6 hingegen ist der Ausgleichsbehälter 7 arbeitsmediumleitend an der Druckseite 22 angeschlossen. Diese Art des Anschlusses ist nicht zwingend und könnte entsprechend auch wechselseitig ausgetauscht werden. Ferner kämen andere Anschlusspunkte in Betracht.

Der Ausgleichsbehälter 7 weist einen Luftraum 9 und einen mit Kühlmedium befüllten Raum 8 auf, wie durch das Symbol für einen Kühlmediumspiegel dargestellt ist. Vorliegend ist ferner ein Überdruckventil am Ausgleichsbehälter 7 im Bereich des Luftraumes 9 angedeutet.

In allen dargestellten Ausführungsformen ist nun der Luftraum 9 über eine luftleitende Verbindung 10 entweder stets oder wahlweise mit dem Arbeitsraum 6 der hydrodynamischen Kupplung 4 verbunden. Bei der Ausführungsform gemäß Figur 1 ist zum Beispiel eine stetige Verbindung vorgesehen, wobei, wie durch die gestrichelten Linien angedeutet, auch hier ein Ventil 11 zum Absperren der luftleitenden Verbindung 10 vorgesehen sein könnte. Entsprechendes gilt für die Figur 2.

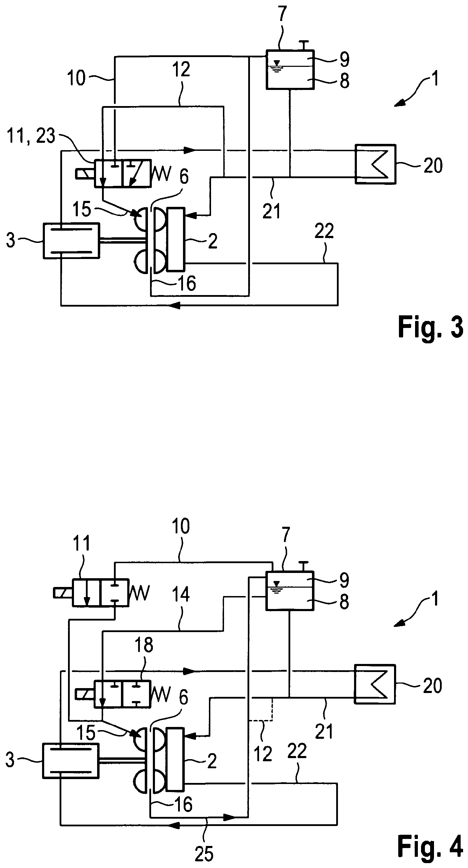

Bei den Ausführungsformen gemäß der Figuren 3 bis 6 hingegen ist in der luftleitenden Verbindung 10 entweder ein 2/2-Wegeventil (Figur 4) oder ein 3/2-Wegeventil (Figuren 3, 5, 6) vorgesehen, letzteres, um den Arbeitsraum 6 der hydrodynamischen Kupplung 4 wahlweise mit Luft in dem Ausgleichsbehälter 7 oder mit Kühlmedium entweder in dem Ausgleichsbehälter 7 oder der Saugseite 21 der Kühlmediumpumpe 2 zu verbinden. Obwohl dies nicht dargestellt ist, wäre alternativ auch eine Verbindung mit der Druckseite 22 der Kühlmediumpumpe 2 möglich, beispielsweise anstelle der mittelbaren Verbindung mit der Druckseite 22 über den Ausgleichsbehälter 7 gemäß der Figur 5.

Alle Ventile, die in den gezeigten Ausführungsbeispielen zum Absperren der luftleitenden Verbindung 10 dienen, sind mit dem Bezugszeichen 11 bezeichnet. Wenn sie zusätzlich noch dem Unterbrechen einer arbeitsmediumleitenden Verbindung dienen, sind diese Ventile mit einem weiteren Bezugszeichen bezeichnet, je nachdem, ob sie in einer arbeitsmediumleitenden Verbindung 12 der Saugseite 21 der Kühlmediumpumpe 2 mit dem Arbeitsraum 6 angeordnet sind - dann sind sie zusätzlich mit dem Bezugszeichen 23 bezeichnet (siehe die Figuren 3 und 6) - oder ob es in einer arbeitsmediumleitenden Verbindung 14 des mit Kühlmedium gefüllten Raumes 8 des Ausgleichsbehälters 7 mit dem Arbeitsraum 6 angeordnet ist - dann ist es mit dem Bezugszeichen 18 bezeichnet (siehe die Figur 5).

In jedem der gezeigten Ausführungsbeispiele weist der Arbeitsraum 6 der hydrodynamischen Kupplung 4 einen Zulauf 15 und einen Ablauf 16 auf. Der Ablauf 16 dient dem Abführen von Arbeitsmedium aus dem Arbeitsraum 6 beim Betrieb der hydrodynamischen Kupplung 4 zum Antreiben der Kühlmediumpumpe 2 und/oder beim Entleeren des Arbeitsraumes 6 zum Vergrößern des Schlupfes zwischen dem Pumpenrad 19 und dem Turbinenrad 5 beziehungsweise beim Abschalten der hydrodynamischen Kupplung 4. Der Zulauf 15 dient entsprechend dem Zuführen von Arbeitsmedium in den Arbeitsraum 6 beim Betrieb der hydrodynamischen Kupplung 4 und/oder beim Zuschalten der hydrodynamischen Kupplung 4 beziehungsweise beim Vermindern des genannten Schlupfes.

Im Ablauf 16 kann ein Rückschlagventil angeordnet sein, welches ein Rückströmen von Arbeitsmedium über den Ablauf 16 in den Arbeitsraum 6 der hydrodynamischen Kupplung 4 verhindert, wie beispielsweise in den Figuren 2, 5 und 6 angedeutet ist. Dieses Rückschlagventil ist jedoch nur eine Option.

Der Zulauf 15 kann entweder mit der Druckseite 22 der Kühlmediumpumpe 2 arbeitsmediumleitend verbunden sein, siehe die Figur 1, wobei hier diese arbeitsmediumleitende Verbindung 13 mittels dem Ventil 17, das als 2/2-Wegeventil ausgeführt ist, wahlweise zu den zuvor genannten Zwecken unterbrechbar ist, oder er kann über eine arbeitsmediumleitende Verbindung 14 mit dem mit Kühlmedium befüllten Raum 8 des Ausgleichsbehälters 7 arbeitsmediumleitend verbunden sein, wobei diese Verbindung durch ein Ventil 18 zu den genannten Zwecken wahlweise unterbrechbar ist. Gemäß der Ausführungsform, die in der Figur 2 dargestellt ist, ist dieses Ventil 18 ebenfalls als 2/2-Wegeventil ausgeführt, ebenso bei der Ausführungsform gemäß der Figur 4. Wie man sieht, sind ferner gemäß der Figur 4 die luftleitende Verbindung 10 und die arbeitsmediumleitende Verbindung 14 hinter dem Bereich der arbeitsmediumleitenden Verbindung 14, in dem das Ventil 18 angeordnet ist, als gemeinsame Leitung geführt. Um einen Eintritt von Luft in diesen gemeinsam geführten Teil der Leitung zu verhindern, ist das Ventil 11 der luftleitenden Verbindung 10 parallel zu dem Ventil 18 und vor der Mündung der luftleitenden Verbindung 10 in der gemeinsamen Leitung angeordnet.

Wie dargelegt, ist gemäß den Figuren 3 und 6 der Zulauf 15 zum Arbeitsraum 6 über eine arbeitsmediumleitende Verbindung 12 mit der Saugseite 21 der Kühlmediumpumpe 2 verbunden, wobei diese arbeitsmediumleitende Verbindung 12 durch ein Ventil 23 wahlweise unterbrochen werden kann. Obwohl vorliegend das Ventil 23 als gemeinsames Ventil mit dem Ventil 11 in der luftleitenden Verbindung 10 ausgeführt ist, können auch zwei getrennt voneinander vorgesehene Ventile ausgeführt werden.

Der Ablauf 16 des Arbeitsraumes 6 der hydrodynamischen Kupplung 4 kann, wie beispielsweise in den Figuren 1, 5 und 6 dargestellt ist, und wie in der Figur 4 als mögliche Alternative durch die gestrichelte Linie angedeutet ist, über eine arbeitsmediumleitende Verbindung mit der Saugseite 21 der Kühlmediumpumpe 2 verbunden sein. Demgemäß ist auch diese arbeitsmediumleitende Verbindung in den genannten Figuren mit dem Bezugszeichen 12 beziffert. Bei der Ausführungsform gemäß der Figur 6 gibt es dementsprechend zwei arbeitsmediumleitende Verbindungen 12 des Arbeitsraumes 6 mit der Saugseite 21 der Kühlmediumpumpe 2 und somit eine Verbindung des Zulaufes 15 mit dem Ablauf 16 über diese beiden arbeitsmediumleitenden Verbindungen 12.

Auch bei der Ausführungsform gemäß der Figur 2 ist der Zulauf 15 mit dem Ablauf 16 des Arbeitsraumes 6 verbunden. Die entsprechend vorgesehene arbeitsmediumführende Verbindung vom Ablauf 16 mündend vor dem Ventil 18 in der Verbindung 14 ist mit 24 bezeichnet.

Die Arbeitsweise der in den Figuren 1 bis 6 dargestellten Kühlsysteme soll nun nachfolgend kurz beschrieben werden:
Gemäß der Figur 1 kann das Ventil 17 zwischen dem Zulauf 15 zum Arbeitsraum 6 und der Druckseite 22 der Kühlmediumpumpe 2 in der arbeitsmediumleitenden Verbindung 13 wahlweise geöffnet und geschlossen, insbesondere auch getaktet betrieben werden, um den Zufluss von Arbeitsmedium in den Arbeitsraum 6 zu steuern und/oder zu regeln. In jenen Zuständen, in denen das Ventil 17 die arbeitsmediumleitende Verbindung 13 unterbricht, strömt weiterhin Arbeitsmedium über den Ablauf 16 aus dem Arbeitsraum 6 in Richtung der Saugseite 21 der Arbeitsmediumpumpe 2 aus, wobei das entsprechende Volumen im Arbeitsraum 6 durch Luft aus dem Ausgleichsbehälter 7 ersetzt wird und so ein problemloses Abfließen von Arbeitsmedium aus dem Arbeitsraum 6 beziehungsweise eine problemlose Entleerung des Arbeitsraumes 6 von Arbeitsmedium ermöglicht wird. Um während des Betriebs der hydrodynamischen Kupplung 4, insbesondere beim Befüllen des Arbeitsraumes 6 über die arbeitsmediumleitende Verbindung 13 einen unerwünscht abfließenden Nebenstrom von Arbeitsmedium aus dem Arbeitsraum 6 in den Ausgleichsbehälter 7 über die luftleitende Verbindung 10 zu vermeiden, kann dort das angedeutete Ventil 11 vorgesehen sein und entsprechend dann geschlossen werden.

Die Ausführungsform gemäß der Figur 2 ist jener der Figur 1 in der Funktion ähnlich. Abweichend erfolgt hier lediglich der Zulauf von Arbeitsmedium in die hydrodynamische Kupplung 4 aus dem Ausgleichsbehälter 7, siehe die arbeitsmediumleitende Verbindung 14 zwischen dem mit Arbeitsmedium befüllten Raum 8 im Ausgleichsbehälter 7 und dem Zulauf 15 zum Arbeitsraum 6. Das Ventil 18 arbeitet entsprechend gemäß dem Ventil 17 in der Figur 1. Abweichend ist ferner, dass der Ablauf 16 mittels der arbeitsmediumleitenden Verbindung 24 an die arbeitsmediumleitende Verbindung 14 vor dem Ventil 18 angeschlossen ist und somit bei geöffnetem Ventil 18 ein Kurzschluss einer Arbeitsmediumströmung vom Ablauf 16 zum Zulauf 15 möglich ist.

Gemäß der Ausführungsform in der Figur 3 wird der Zulauf 15 zum Arbeitsraum 6 wahlweise über die eingestellte Schaltstellung des Ventils 11, 23 mit Luft aus dem Luftraum 9 oder mit Arbeitsmedium aus der Saugseite 21 beaufschlagt. Auch hier kann eine getaktete Betätigung des Ventils 11, 23 vorgesehen sein, um den Füllungsgrad des Arbeitsraumes 6 zu steuern oder zu regeln.

Gemäß der Figur 4 wird entweder das Ventil 18 geöffnet, um Arbeitsmedium aus dem Ausgleichsbehälter 7 dem Zulauf 15 zum Arbeitsraum 6 zuzuführen, oder das Ventil 11 wird geöffnet, um Luft aus dem Luftraum 9 dem Zulauf 15 zuzuführen. Das jeweils andere Ventil wird entsprechend geschlossen.

Der Ablauf 16 ist hier mittels der arbeitsmediumleitenden Verbindung 25 mit dem Ausgleichsbehälter 7, und zwar vorliegend mit dem Luftraum 9, verbunden. Alternativ wäre jedoch auch eine Verbindung mit der Saugseite 21 möglich, wie durch die gestrichelte Linie dargestellt ist, oder auch mit dem mit Arbeitsmedium befüllten Raum 8 des Ausgleichsbehälters 7.

Gemäß der Figur 5 erfolgt eine Umschaltung des Ventils 11, 18, um entweder den Luftraum 9 des Ausgleichsbehälters 7 mit dem Zulauf 15 zum Arbeitsraum 6 zu verbinden oder den mit Arbeitsmedium befüllten Raum 8 des Ausgleichsbehälters 7. Auch dieses Ventil kann, wie die zuvor beschriebenen Ventile, ebenfalls getaktet betrieben werden, wenn gewünscht.

Die Ausführungsform gemäß der Figur 6 ist ähnlich jener der Figur 5 bezüglich der Funktionsweise, nur dass hier nicht das Arbeitsmedium aus dem Ausgleichsbehälter 7, sondern aus der Saugseite 21 der Arbeitsmediumpumpe 2 entsprechend dem Zulauf 15 zugeführt wird.

Besonders vorteilhaft wird die Ansteuerung der Ventile bei den gezeigten Ausführungsformen derart gewählt, dass bei einem Ausfall der Steuerung der Arbeitsraum 6 der hydrodynamischen Kupplung 4 mit Arbeitsmedium befüllt wird, um die Kühlmediumpumpe 2 anzutreiben.

## Patentansprüche

1. Kühlsystem, insbesondere Kraftfahrzeugkühlsystem
1.1 mit einem Kühlkreislauf (1), in welchem ein Kühlmedium mittels einer Kühlmediumpumpe (2) umgewälzt wird; wobei
1.2 die Kühlmediumpumpe (2) oder eine andere Arbeitsmaschine mittels einer Antriebsmaschine (3) über eine hydrodynamische Kupplung (4), umfassend ein von der Antriebsmaschine (3) angetriebenes Pumpenrad (19) und ein die Kühlmediumpumpe (2) antreibendes Turbinenrad (5), die miteinander einen torusförmigen, wahlweise mit Arbeitsmedium befüllbaren Arbeitsraum (6) bilden, angetrieben wird; wobei
1.3 das Arbeitsmedium das Kühlmedium ist;
1.4 mit einem Ausgleichsbehälter (7), umfassend einen mit Kühlmedium befüllten Raum (8) und einen Luftraum (9) oberhalb eines Kühlmediumspiegels in dem mit Kühlmedium befüllten Raum (8); **dadurch gekennzeichnet, dass**
1.5 der Arbeitsraum (6) der hydrodynamischen Kupplung (4) über eine luftleitende Verbindung (10) stets mit dem Luftraum (9) verbunden oder wahlweise mit diesem verbindbar ist.

2. Kühlsystem gemäß Anspruch 1, **dadurch gekennzeichnet, dass** das Kühlsystem als gegenüber der Umgebung druckdicht abgeschlossenes System, insbesondere mit einem Überdruck gegenüber der Umgebung ausgeführt ist.

3. Kühlsystem gemäß einem der Ansprüche 1 oder 2, **dadurch gekennzeichnet, dass** in der luftleitenden Verbindung (10) ein Absperrventil (11) insbesondere in Form eines Wegeventils vorgesehen ist, um die luftleitende Verbindung (10) wahlweise zu unterbrechen und freizugeben.

4. Kühlsystem gemäß einem der Ansprüche 1 bis 3, **dadurch gekennzeichnet, dass** der Arbeitsraum (6) der hydrodynamischen Kupplung (4) über eine weitere, arbeitsmediumleitende Verbindung (12) mit der Saugseite (21) der Kühlmediumpumpe (2) stets verbunden oder wahlweise verbindbar ist.

5. Kühlsystem gemäß einem der Ansprüche 1 bis 4, **dadurch gekennzeichnet, dass** der Arbeitsraum (6) der hydrodynamischen Kupplung (4) über eine weitere, arbeitsmediumleitende Verbindung (13) mit der Druckseite (22) der Kühlmediumpumpe (2) wahlweise verbindbar ist, wobei diese Verbindung, insbesondere mittels eines Ventils (17), wahlweise unterbrechbar ist.

6. Kühlsystem gemäß einem der Ansprüche 1 bis 5, **dadurch gekennzeichnet, dass** der Arbeitsraum (6) der hydrodynamischen Kupplung (4) über eine weitere, arbeitsmediumleitende Verbindung (14) mit dem mit Kühlmedium befüllten Raum (8) des Ausgleichsbehälters (7) wahlweise verbindbar ist, wobei diese Verbindung, insbesondere mittels eines Ventils (8), wahlweise unterbrechbar ist.

7. Kühlsystem gemäß einem der Ansprüche 1 bis 6, **dadurch gekennzeichnet, dass** der Arbeitsraum (6) der hydrodynamischen Kupplung (4) einen Zulauf (15) und einen Ablauf (16) aufweist, wobei der Zulauf (15) insbesondere mittels eines Ventils (17, 18) absperrbar ist, und der Ablauf (16) mit dem Zulauf (15) über eine arbeitsmediumleitende Verbindung (12, 24) verbunden ist, sodass über den Ablauf (16) aus dem Arbeitsraum (6) abgeführtes Arbeitsmedium über den Zulauf (15) dem Arbeitsraum (6) zumindest teilweise oder vollständig wieder zugeführt wird.

8. Kühlsystem gemäß einem der Ansprüche 3 bis 7, **dadurch gekennzeichnet, dass** das in der luftleitenden Verbindung (10) vorgesehene Ventil (11) und/oder das in einer arbeitsmediumleitenden, am Arbeitsraum (6) angeschlossenen Verbindung (12, 13, 14) vorgesehene Ventil (17, 18) getaktet betätigbar ist, um den Füllungsgrad des Arbeitsraumes (6) mit Arbeitsmedium variabel und umfassend Teilfüllungen einzustellen.

9. Kühlsystem gemäß einem der Ansprüche 1 bis 8, **dadurch gekennzeichnet, dass** das Turbinenrad (5) der hydrodynamischen Kupplung (4) einteilig mit einem Laufrad der Kühlmediumpumpe (2) ausgeführt ist und/oder ein - solches trägt, und insbesondere relativ auf dem Pumpenrad (19) oder auf einer dieses antreibenden Welle gelagert ist.

## Claims

1. Cooling system, in particular a motor vehicle cooling system, comprising
1.1 a cooling circuit (1), in which a cooling medium is circulated by means of a cooling medium pump (2); wherein
1.2 the cooling medium pump (2) or another work machine is driven by means of a drive machine (3) via a hydrodynamic coupling (4) comprising a pump impeller (19) driven by the drive machine (3) and a turbine wheel (5) driving the cooling medium pump (2), which together form a toroidal working chamber (6) which can optionally be filled with working medium; wherein
1.3 the working medium is the cooling medium;
1.4 a compensating container (7), comprising a space (8) filled with cooling medium and an air chamber (9) above a cooling medium level in the space (8) filled with cooling medium;
**characterised in that**
1.5 the working chamber (6) of the hydrodynamic coupling (4) is always connected to the air chamber (9) or can optionally be connected to the latter via an air-conducting connection (10).

2. Cooling system according to claim 1, **characterised in that** the cooling system is designed as a pressure-tight sealed system to the surrounding atmosphere, in particular with an overpressure with respect to the surrounding atmosphere.

3. Cooling system according to one of claims 1 or 2, **characterised in that** a shut-off valve (11) is provided in the air-conducting connection (10), in particular in the form of a directional valve, in order to interrupt and release the air-conducting connection (10) selectively.

4. Cooling system according to one of claims 1 to 3, **characterised in that** the working chamber (6) of the hydrodynamic coupling (4) is always connected to the suction side (21) of the cooling medium pump (2) or can optionally be connected to the latter via an additional connection (12) for conveying the working medium.

5. Cooling system according to one of claims 1 to 4, **characterised in that** the working chamber (6) of the hydrodynamic coupling (4) can optionally be connected to the pressure side (22) of the cooling medium pump (2) via an additional connection (13) for conveying the working medium, whereas said connection can optionally be interrupted, in particular by means of a valve (17).

6. Cooling system according to one of claims 1 to 5, **characterised in that** the working chamber (6) of the hydrodynamic coupling (4) can optionally be connected to the space (8) filled with cooling medium of the compensating container (7) via an additional connection (14) for conveying the working medium, whereas said connection can optionally be interrupted, in particular by means of a valve (8).

7. Cooling system according to one of claims 1 to 6, **characterised in that** the working chamber (6) of the hydrodynamic coupling (4) has an inlet (15) and an outlet (16), whereas said inlet (15) can be shut off, in particular by means of a valve (17, 18), and the outlet (16) is connected to the inlet (15) via a connection (12, 24) for conveying the working medium, so that working medium discharged from the working chamber (6) via the outlet (16) is returned at least partially or completely back to the working chamber (6) via the inlet (15).

8. Cooling system according to one of claims 3 to 7, **characterised in that** the valve (11) provided in the air-conducting connection (10) and/or the valve (17, 18) provided in a connection (12, 13, 14) for conveying the working medium, which is connected to the working chamber (6), can be operated in a clocked manner so as to adjust the filling level of the working chamber (6) with working medium variably and including partial fill-ups.

9. Cooling system according to one of claims 1 to 8, **characterised in that** the turbine wheel (5) of the hydrodynamic coupling (4) is designed integrally with a rotor of the cooling medium pump (2) and/or carries the same, and is mounted in particular relatively on the pump impeller (19) or on a shaft driving the same.

## Revendications

1. Système de refroidissement, en particulier système de refroidissement de véhicule automobile
1.1 avec un circuit de refroidissement (1) dans lequel un fluide de refroidissement est mis en circulation au moyen d'une pompe de fluide de refroidissement (2) ; dans lequel
1.2 la pompe de fluide de refroidissement (2) ou une autre machine de travail est entraînée au moyen d'une machine d'entraînement (3) par l'intermédiaire d'un accouplement hydrodynamique (4), comprenant une roue de pompe (19) entraînée par la machine d'entraînement (3) et une roue de turbine (5) entraînant la pompe de fluide de refroidissement (2), qui forment ensemble une chambre de travail toroïdale (6) qui peut être sélectivement remplie de fluide de travail ; dans lequel
1.3 le fluide de travail est le fluide de refroidissement ;
1.4 avec un vase d'expansion (7), comprenant un espace (8) rempli de fluide de refroidissement et un espace d'air (9) au-dessus d'un niveau de fluide de refroidissement dans l'espace (8) rempli de fluide de refroidissement ;
**caractérisé en ce que**
1.5 la chambre de travail (6) de l'accouplement hydrodynamique (4) est toujours reliée à l'espace d'air (9) par l'intermédiaire d'une liaison conductrice d'air (10) ou peut y être reliée sélectivement.

2. Système de refroidissement selon la revendication 1, **caractérisé en ce que** le système de refroidissement est réalisé sous la forme d'un système fermé de manière étanche à la pression par rapport à l'environnement, en particulier avec une surpression par rapport à l'environnement.

3. Système de refroidissement selon l'une des revendications 1 ou 2, **caractérisé en ce qu'**une soupape d'arrêt (11) est prévue dans la liaison conductrice d'air (10), en particulier sous la forme d'un distributeur, pour interrompre et libérer sélectivement la liaison conductrice d'air (10).

4. Système de refroidissement selon l'une des revendications 1 à 3, **caractérisé en ce que** la chambre de travail (6) de l'accouplement hydrodynamique (4) est toujours reliée ou peut être reliée sélectivement au côté aspiration (21) de la pompe de fluide de refroidissement (2) par l'intermédiaire d'une autre liaison conductrice de fluide de travail (12).

5. Système de refroidissement selon l'une des revendications 1 à 4, **caractérisé en ce que** la chambre de travail (6) de l'accouplement hydrodynamique (4) peut être reliée sélectivement au côté pression (27) de la pompe de fluide de refroidissement (2) par l'intermédiaire d'une autre liaison conductrice de fluide de travail (13), cette liaison pouvant être interrompue sélectivement, en particulier au moyen d'une soupape (17).

6. Système de refroidissement selon l'une des revendications 1 à 5, **caractérisé en ce que** la chambre de travail (6) de l'accouplement hydrodynamique (4) peut être reliée sélectivement à l'espace (8) du vase d'expansion (7) rempli de fluide de refroidissement par l'intermédiaire d'une autre liaison conductrice de fluide de travail (14), cette liaison pouvant être interrompue sélectivement, en particulier au moyen d'une soupape (8).

7. Système de refroidissement selon l'une des revendications 1 à 6, **caractérisé en ce que** la chambre de travail (6) de l'accouplement hydrodynamique (4) présente une entrée (15) et une sortie (16), l'entrée (15) pouvant être fermée, en particulier au moyen d'une soupape (17, 18), et la sortie (16) étant reliée à l'entrée (15) par l'intermédiaire d'une liaison conductrice de fluide de travail (12, 24), de sorte que le fluide de travail déchargé de la chambre de travail (6) par la sortie (16) est ramené au moins partiellement ou complètement dans la chambre de travail (6) par l'entrée (15).

8. Système de refroidissement selon l'une des revendications 3 à 7, **caractérisé en ce que** la soupape (11) prévue dans la liaison conductrice d'air (10) et/ou la soupape (17, 18) prévue dans une liaison conductrice de fluide de travail (12, 13, 14) raccordée à la chambre de travail (6) peut être actionnée de manière cadencée pour régler le degré de remplissage de la chambre de travail (6) avec du fluide de travail de manière variable et comprenant des remplissages partiels.

9. Système de refroidissement selon l'une des revendications 1 à 8, **caractérisé en ce que** la roue de turbine (5) de l'accouplement hydrodynamique (4) est réalisée d'une seule pièce avec un rotor de la pompe de fluide de refroidissement (2) et/ou porte un tel rotor, et est en particulier montée de manière relative sur la roue de pompe (19) ou sur un arbre qui entraîne celle-ci.
